# EUROPEAN PATENT APPLICATION

(11) **EP 1 912 446 A1**
(43) Date of publication of application: **16.04.2008**
(21) Application number: 06781582.9
(22) Date of filing: 25.07.2006
(51) Int. Cl.: H04N 13/00

(54) **3D IMAGE RECORDING DEVICE AND PROGRAM**

(30) Priority: 26.07.2005 JP 2005215403
(71) Applicant: Sharp Kabushiki Kaisha, Osaka-shi, Osaka 545-8522 (JP); Olympus Imaging Corporation, Shibuya-ku Tokyo 151-0072 (JP); Sanyo Electric Co., Ltd., Osaka 570-8677 (JP)
(72) Inventor: KITAURA, Ryuji, Chiba-shi, Chiba 262-0044 (JP); YOSHIDA, Hideaki c/o Olympus Imaging Corp., Tokyo 151-0072 (JP); MASHITANI, Ken, 5720839 (JP); MURATA, Haruhiko, Ibaraki City, Osaka 567-0046 (JP); SEKIZAWA, Hidehiko c/o Sony Corporation, Tokyo 108-0075 (JP)
(74) Representative: Brown, Kenneth Richard
(86) International application number: PCT/JP2006/314670
(87) International publication number: WO 2007/013451

(57) **Abstract**

If horizontal viewpoint quantity information Nx and vertical viewpoint quantity information Ny are predetermined quantities, a value of the aspect ratio of the output image data to be finally output satisfies a predetermined condition, and a 3D identification mark is contained in the output image data, then an image recording device adds a first extension as general-purpose 3D image data which can also be used in a conventional device and records it. Accordingly, when 3D image data is output (displayed and printed) in a conventional device, image data which can be used as 3D image data (which can be viewed as a stereoscopic image) can be output as general-purpose image data while image data which cannot be used as 3D image data in the conventional device is not output as image data. This prevents a confusion of general users.

## Description

### TECHNICAL FIELD

The present invention relates to a stereoscopic image recording device or the like for creating stereoscopic image data from image data corresponding to two or more different viewpoints and recording the same.

### BACKGROUND ART

Conventionally, a variety of methods for displaying a three-dimensional image have been proposed. In the methods, a so-called "two-eye method", which uses parallax of both eyes, is generally used. That is to say, by preparing an image for a left eye (left-eye image) and an image for a right eye (right-eye image) having the parallax of both eyes, and independently projecting them to the left and right eyes, respectively, stereoscopic viewing may be realized. As representative two-eye methods, a field sequential method and a parallax barrier method are proposed.

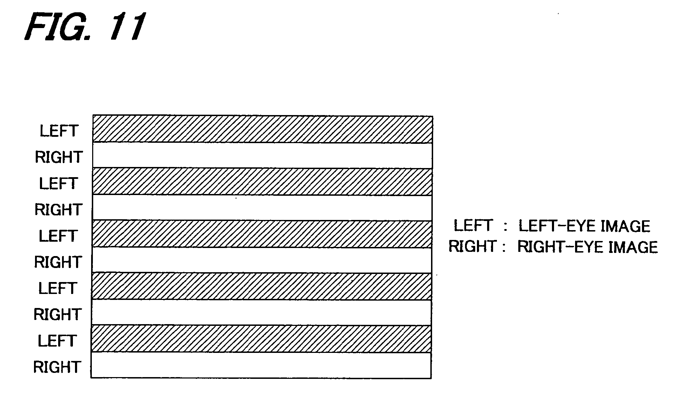

Fig. 11 is a schematic diagram for illustrating the field sequential method. This field sequential method is such that the left-eye image and the right-eye image are alternately arranged every second pixel in the vertical direction as shown in Fig. 11, and a display of the left-eye image and a display of the right-eye image are alternately displayed. Vertical resolution of the left-eye image and the right-eye image is half of that in general two-dimensional display. An observer wears shutter-type glasses, which open and close in synchronization with a switching period of the display. The shutter herein used is such that a left-eye side opens and a right-eye side closes while the left-eye image is displayed and the left-eye side closes and the right-eye side opens while the right-eye image is displayed. By configuring so, the left-eye image is observed only by the left eye and the right-eye image is observed only by the right eye, so that stereoscopically viewing is realized.

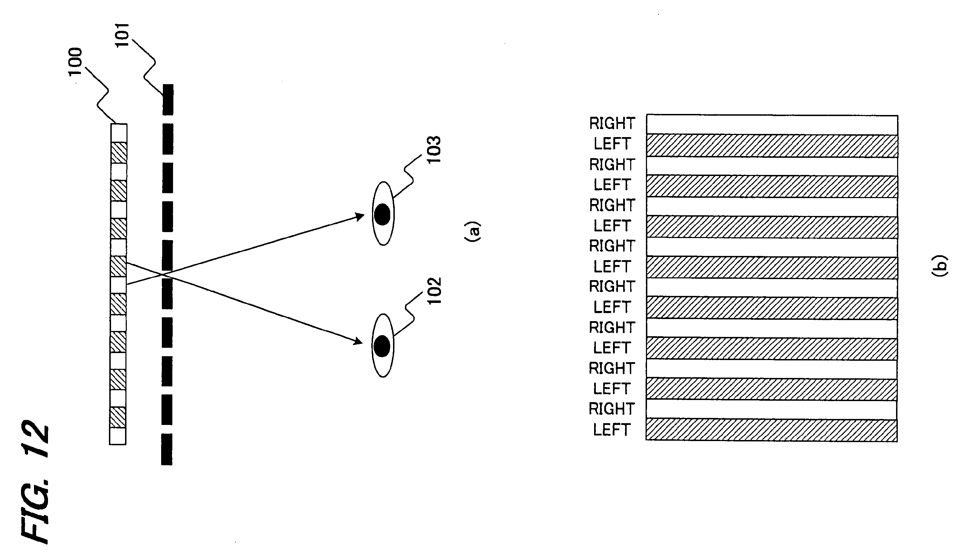

Fig. 12 is a schematic diagram for illustrating the parallaxbarriermethod. Fig. 12 (a) isaviewshowingaprinciple way parallax occurs. On the other hand, Fig. 12(b) is a view showing a screen, which is displayed by the parallax barrier method. In Fig. 12(a), an image in which the left-eye image and the right-eye image are alternately arranged every second pixel in the horizontal direction as shown in Fig. 12(b) is displayed on an image display panel 100. Then by placing a parallax barrier 101, which has a slit with a gap narrower than a gap between pixels of the same viewpoint in front of the image display panel 100, the left-eye image is observed by only a left eye 102 and the right-eye image is observed by only a right eye 103, so that the stereoscopic viewing is realized.

Also, the method for generating the stereoscopic image by taking the left-eye image and the right-eye image and synthesizing them as one synthesized image is disclosed in the patent document 1.
Patent Document 1: Japanese Patent Application Laid-Open No. 2002-125246

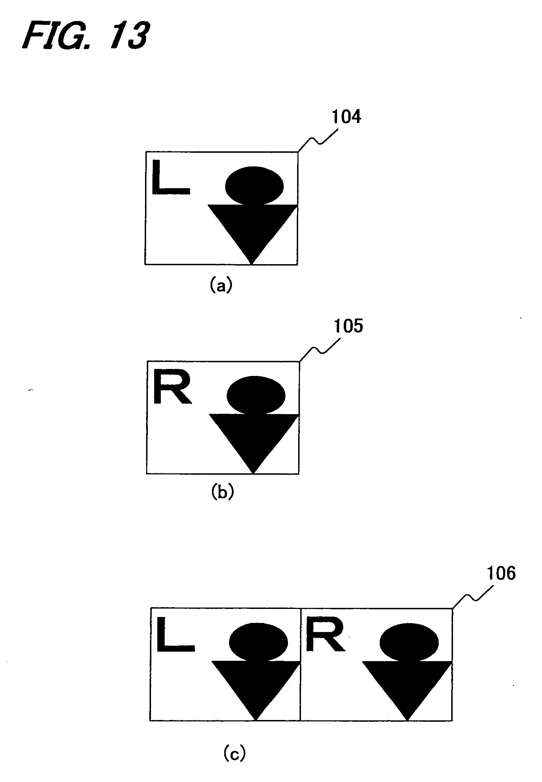

Herein, Fig. 13 is a schematic diagram showing an example of a recording data format of such synthesized image. Arranging a left-eye image 104 shown in Fig. 13(a) and a right-eye image 105 shown in Fig. 13(b) left and right, thereby creating one synthesized image 106 shown in Fig. 13 (c) and records the same. When reproducing, rearranging the synthesized image 106, thereby converting the same to the image, which is suitable to respective display format, shown in Figs. 11 and 12 (b) . Also, by printing the synthesized image 106 and observing a printed matter by naked eyes, it becomes possible to stereoscopically view.

### DISCLOSURE OF THE INVENTION

### PROBLEM TO BE SOLVED BY THE INVENTION

However, in the patent document 1, the two image, which are taken from positions of which viewpoint are different, are treated as one image data (this image data is the image data for stereoscopically displaying, and hereinafter, referred to as "3D image data", also hereinafter, a term "3D" is used to mean three-dimensional or stereoscopic, and a term "2D" is used to means two-dimensional, and a stereoscopic image and a general two-dimensional image are referred to as "3D image" and "2D image", respectively) formed by horizontally arranging them, so that the 3D image data recorded by these devices becomes data in which two image data as the synthesized image 106 shown in Fig. 13 (c) are arranged right and left.

However, when this 3D image data is read by the conventional image display device and displayed on the display or when printing the same with an image printing device, the devices not supporting the 3D image data, there has been a case in which the data is displayed in a state, which is not supposed, because the stereoscopic viewing is not possible. Generally, in these devices, a kind of data is judged based on an extension attributed to the data (file) and displayed. For example, when the extension of the data is "jpg", the data is displayed and printed as the image data (2D image data). Therefore, there has been a problem that general users, who do not know that the data is the 3D image data, may not judge whether this is the 2D image or the 3D image, thereby causing confusion.

Also, a method in which information indicating that the recorded image data is the 3D image data is stored in a header (for example a portion to store extension information), and means capable of interpreting the information is provided on the image display device or the image printing device, thereby displaying and printing that this is the 3D image data may be considered, however, there has been a problem that it is not possible to meet this with the device, which is not provided with the means.

In addition, when taking a picture with a digital camera and printing taken image data by utilizing automatic printing process (professional-use printing service and automatic printing process in household printer), which is general in the printing device, there is a case in which the image data is automatically trimmed to a predetermined aspect ratio (horizontal to vertical ratio) conforming to a size of printing paper and is printed.

For example, when the right and left images are respectively taken with the digital camera for taking the image data of which aspect ratio is 4:3, and the 3D image data as shown in Fig. 13(c) is created by using them, created 3D image data becomes horizontally long 3D image data of which aspect ratio is 8:3. When printing this 3D image data with the image printing device, which is set to automatically trim such that the aspect ratio becomes 4:3, there has been a case that not only the stereoscopic viewing is impossible but also it is not possible to determine how the printed image is, if the image is largely deleted in the horizontal direction.

The present invention is achieved in order to solve the above-described problem, and an object of the present invention is to provide the stereoscopic image recording device or the like capable of preventing confusion of the general users by outputting the image data, which can be used as the 3D image data (which can be viewed stereoscopically) as general-purpose image data, and by not outputting the image data, which cannot be used as the 3D image data in the convention device, as the image data, even when outputting (displaying and printing) the 3D image data in the conventional device.

### MEANS FOR SOLVING THE PROBLEM

The present invention is a stereoscopic image recording device for creating stereoscopic image data from image data corresponding to two or more different viewpoints and recording the same, comprising: general-purpose stereoscopic image data judging means for judging whether the image data contained in the stereoscopic image data, out of created stereoscopic image data, is general-purpose stereoscopic image data or not; and extension decision recording means for adding a first predetermined extension as an extension of the stereoscopic image data and recording the same when the general-purpose stereoscopic image data judging means judges that the stereoscopic image data is the general-purpose stereoscopic image data, and adding a second predetermined extension as the extension of the stereoscopic image data and recording the same when judged not to be the general-purpose stereoscopic image data.

Also, it is characterized that a condition of judging performed by the general-purpose stereoscopic image data judging means contains at least one of conditions: whether a viewpoint quantity is 2 or not, whether an aspect ratio satisfies a predetermined condition or not, whether a horizontal to vertical ratio of image scaling satisfies a predetermined condition or not, and whether arrangement of the image satisfies a predetermined condition or not.

Also, it is characterized that the general-purpose stereoscopic image data judging means is further provided with mark judging means for judging to be the general-purpose stereoscopic image data, when the mark indicating the image for stereoscopic viewing is contained in the stereoscopic image data .

Also, it is characterized that the stereoscopic image data is recorded by setting the first predetermined extension as an extension of a JPEG image.

Also, it is characterized in further comprising aspect ratio adjusting means for adjusting an aspect ratio of the stereoscopic image data to a predetermined aspect ratio, when the aspect ratio of the stereoscopic image data is other than the predetermined aspect ratio.

The present invention is a computer for creating stereoscopic image data from image data corresponding to two or more different viewpoints and recording the same, wherein a general-purpose stereoscopic image data judging function for judging whether the stereoscopic image data is general-purpose stereoscopic image data in which a viewpoint quantity of the image data contained in the stereoscopic image data is two and an aspect ratio of the stereoscopic image data satisfies a predetermined condition or not, out of created stereoscopic image data; and an extension decision recording function for adding a first predetermined extension as an extension of the stereoscopic image data and recording the same when the general-purpose stereoscopic image data judging function judges that the stereoscopic image data is the general-purpose stereoscopic image data, and adding a second predetermined extension as an extension of the stereoscopic image data and recording the same when judged not to be the general-purpose stereoscopic image data.

### EFFECT OF THE INVENTION

According to the stereoscopic image recording device of the present invention, when following two conditions, which are "stereoscopic image data created by arranging two images picked from different viewpoints in parallel (condition 1)" and "an aspect ratio of the stereoscopic image data is not smaller than a predetermined value (condition 2)" are satisfied, the stereoscopic image data is recorded with an extension of a first predetermined image data format file (for example, "jpg") as general-purpose stereoscopic image data (general-purpose stereoscopic image data), and if the conditions are not satisfied, this is recorded with a second predetermined extension (for example, "stj"). Therefore, when outputting (displaying and printing) with the conventional image displaying device or image recording device, this is output by judged to be the image data in a case of the first predetermined extension, and is not output by judged to be other than the image data in a case of the second predetermined extension. Therefore, it becomes possible to prevent a confusion of general users with the conventional device.

Also, according to the stereoscopic image recording device of the present invention, when "a mark indicating the image data for stereoscopic viewing is added on the image (condition 3)" is satisfied together with the two conditions, the stereoscopic image data is recorded with the extension of a first predetermined image data format file (for example, "jpg") as the general-purpose stereoscopic image data (general-purpose stereoscopic image data), and when it is not satisfied, this is recorded with the second predetermined extension (for example, "stj").

Also, since the stereoscopic image data, which the stereoscopic image recording device records, stores 3D control information containing the information indicating that the image data is the stereoscopic image data in the header thereof, in the image displaying device or image printing device provided with analyzing means of the 3D control information capable of interpreting the information, by displaying and printing the stereoscopic image data relative to the stereoscopic image data, it is possible to prevent the trouble of general users.

Also, the 3D image data, which the stereoscopic image recording device records, is stored with the extension other than the predetermined extension, when the two or three conditions are not satisfied. Therefore, in the image displaying device or image printing device, which are not provided with the analyzing means of the 3D control information, since the stereoscopic image data is not recognized as the predetermined image data, this is not displayed and printed, and it is possible to prevent the confusion of general users.

Also, in the image data of which extension is the predetermined extension, out of the stereoscopic image data recorded by the stereoscopic image recording device of the present invention, it is limited such that the aspect ratio of the stereoscopic image data is not smaller than the predetermined value, so that when printing by the automatic printing process or the like with the conventional image displaying device or image printing device, a problem that the stereoscopic image data is largely cut away in the horizontal direction by trimming and it is not possible to stereoscopically view and a problem that it is not possible to determine how the printed matter is depending on the trimming position, are prevented.

### BRIEF DESCRIPTION OF THE DRAWINGS

[Fig. 1] Fig. 1 is a block diagram showing a structure of a stereoscopic image recording device of an example of the present invention;
[Fig. 2] Fig. 2 is a view showing an example of 3D image data;
[Fig. 3] Fig. 3 is a view showing an example of image data in the 3D image data;
[Fig. 4] Fig. 4 is a view showing an example of image data in the 3D image data;
[Fig. 5] Fig. 5 is a view showing an example of image data in the 3D image data;
[Fig. 6] Fig. 6 is a view illustrating an example of the 3D image data in which an image horizontal to vertical ratio is changed;
[Fig. 7] Fig. 7 is a view showing an example of padded 3D image data;
[Fig. 8] Fig. 8 is a view showing an example of padded 3D image data;
[Fig. 9] Fig. 9 is a view showing an example of 3D image data created by adding a 3D identification mark;
[Fig. 10] Fig. 10 is a flow chart illustrating an operation of extension decision means 10;
[Fig. 11] Fig. 11 is a schematic diagram illustrating a field sequential method;
[Fig. 12] Fig. 12 is a schematic diagram illustrating a parallax barrier method; and
[Fig. 13] Fig. 13 is a schematic diagram showing an example of a recording data format of a synthesized image of a left-eye image and a right-eye image.

### DESCRIPTION OF REFERENCE NUMERALS

- 1: stereoscopic image recording device
- 2: control means
- 3: image synthesis means
- 4: padding means
- 5: mark addition means
- 6: compression means
- 7: multiplexing means
- 8: header information creation means
- 9: extension generation means
- 10: extension decision means
- 11: header
- 12: image data
- 100: image display panel
- 101: parallax barrier
- 102: right eye
- 103: left eye
- 104: left-eye image
- 105: right-eye image
- 106: synthesized image

### BEST MODE FOR CARRYING OUT THE INVENTION

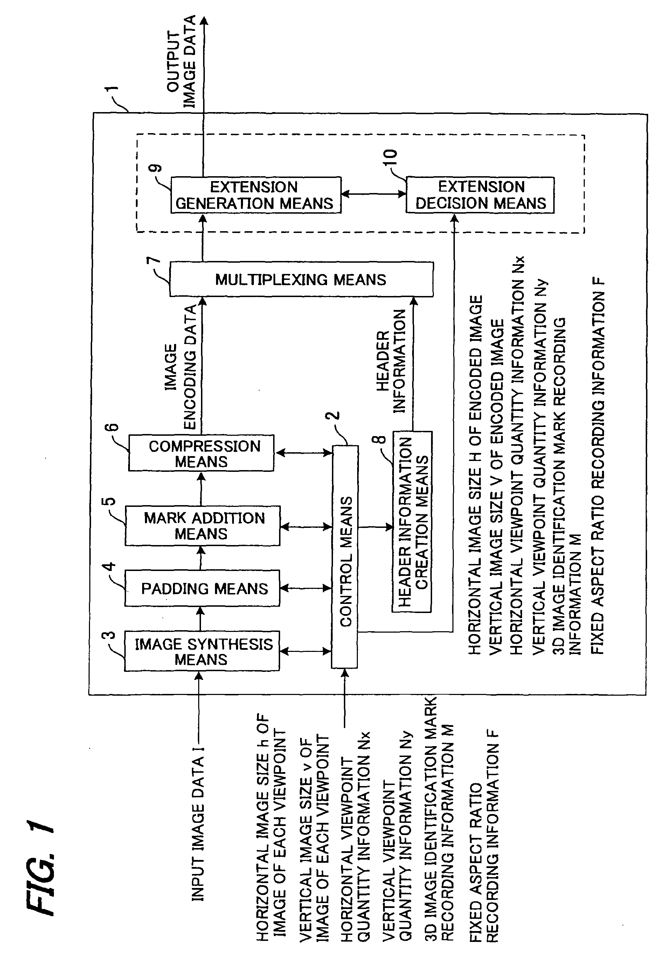

An embodiment of the present invention is described with reference to attached drawings. Fig. 1 is a block diagram showing a configuration of a stereoscopic image recording device 1 of the embodiment of the present invention.

The stereoscopic image recording device 1 is the device for inputting input image data, a horizontal image size and a vertical image size of each viewpoint, horizontal viewpoint quantity information and vertical viewpoint quantity information indicating a quantity of viewpoints contained in 3D image data, 3D image identification mark recording information indicating whether a 3D identification mark is contained in the 3D image data or not, and inputting fixed aspect ratio recording information indicating whether the image is recorded with a predetermined aspect ratio or not, and outputting the 3D image data. The stereoscopic image recording device 1 is provided with control means 2, image synthesis means 3, padding means 4, markadditionmeans 5, compressionmeans 6, multiplexingmeans 7, header information creationmean 8, extension generationmeans 9, and extension decision means 10.

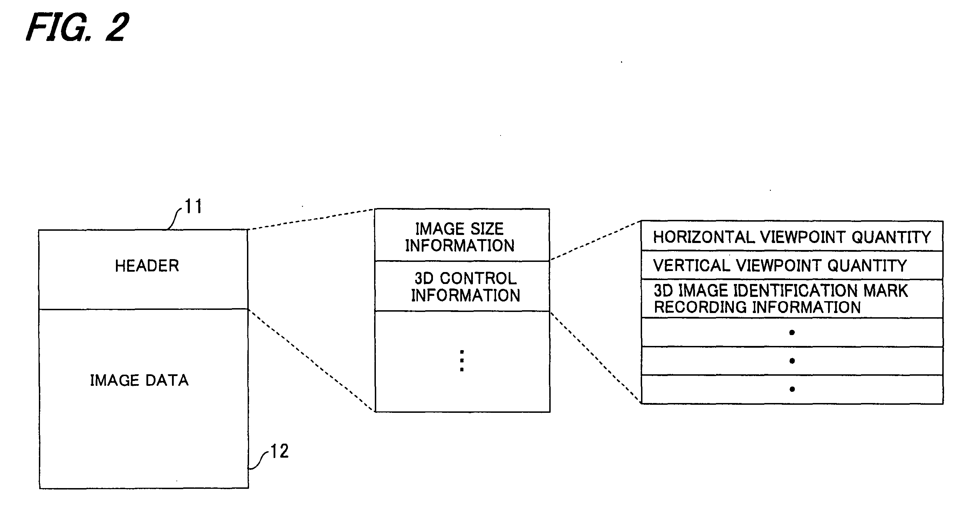

Herein, the 3D image data is the data containing image data and 3D control information. Fig. 2 is a view showing an example of a data structure of the 3D image data. The 3D image data contains a header 11 and image data 12, and in the header 11, image size information, the 3D control information and the like of the image data 12 are contained. As an example of the header, there may be a header in a file format such as EXIF (Exchangeable Image File Format), AVI (Audio Video Interleaved), ASF (Advanced Streaming Format), WMV (Windows Media Video) and MP4. Also, as an example of the image data, there may be uncompressed image data and compressed image data, which is compressed by a compressing method such as JPEG (Joint Photographic Experts Group) and MPEG (Moving Picture Experts Group).

In addition, the 3D control information indicates information on the structure of the image data in the 3D image data and the information for controlling a display when displaying the 3D image, and contains the viewpoint quantities in the horizontal and the vertical directions and the 3D image identification mark recording information.

The viewpoint quantities in the horizontal and the vertical directions indicate information of the quantities of image data of which viewpoints are different to one another, contained in the 3D image data. Also, the 3D image identification mark recording information indicates information indicating whether the mark for identifying whether the image data 12 is the 3D image data or not is contained or not.

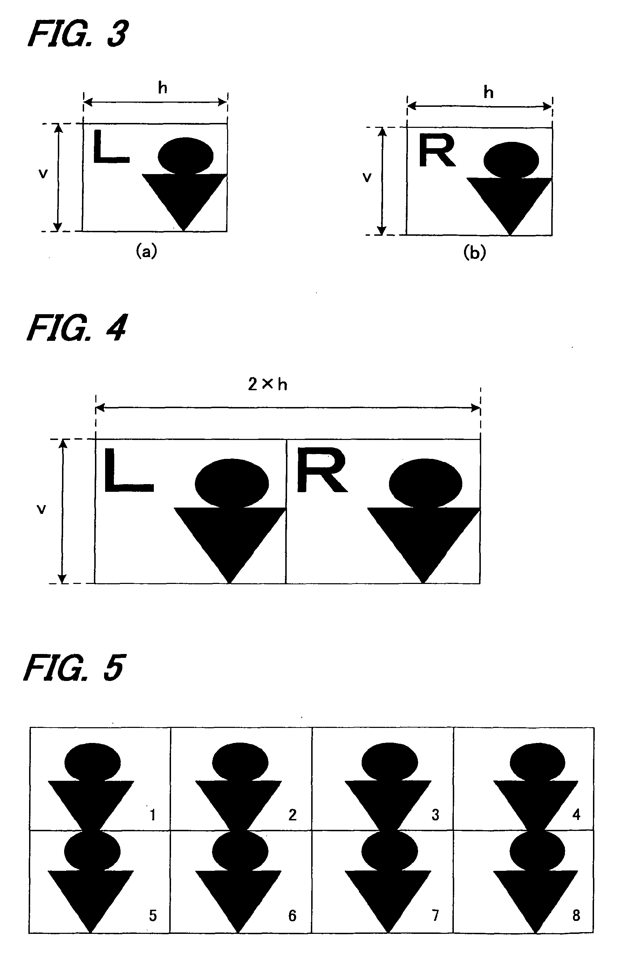

Figs. 3, 4 and 5 are views for illustrating an example of the image data in the 3D image data. For example, Figs. 3 (a) and 3 (b) show a left-eye image and a right-eye image, respectively, and a horizontal image size "h" and a vertical image size "v" of each image are same. The left-eye image and the right-eye image are horizontally arranged from a left side in the order of the viewpoints as shown in Fig. 4, thereby creating one image data. Herein, the viewpoint quantities of the image data are "2" in the horizontal direction and "1" in the vertical direction. The image size of this 3D image data is such that the horizontal image size is "2xh" and the vertical image size is "v".

Fig. 5 is a view showing an example in which the viewpoint quantity in the horizontal direction is "4" and the viewpoint quantity in the vertical direction is "2", and the image data of eight viewpoints are arranged from a left upper portion to a right lower portion in a raster scan manner in the order of the viewpoints from the number "1" to "8" as in the description of Fig. 4, thereby causing one 3D image data.

Also, in the 3D image data at this time, it is possible to change a horizontal to vertical ratio of the image. The horizontal to vertical ratio of the image indicates information representing a value obtained by dividing a scale ratio in the vertical direction of the image data by the scale ratio in the horizontal direction thereof.

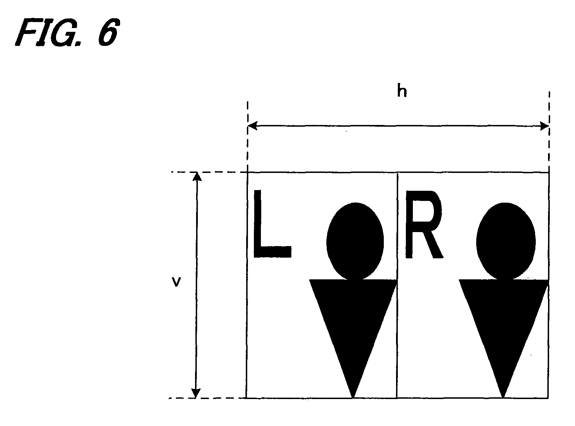

Fig. 6 is a view for illustrating an example in a case in which the horizontal to vertical ratio of the 3D image data is changed. In the 3D image data in Figs. 4 and 5, since the horizontal to vertical ratio of the image is not changed when creating the same, the horizontal to vertical ratio of the image is "1", however, the 3D image data in Fig. 6 is, for example, the image data in which a longitudinal scale of the 3D image data in Fig. 4 is not changed and a lateral scale thereof is made "half", and the 3D image size is "h" in the horizontal direction and "v" in the vertical direction, and the horizontal to vertical ratio of image scaling becomes "2". Herein, the horizontal to vertical ratio "2" of the image scaling is recorded in the 3D control information as image horizontal to vertical ratio information. Hereinafter, for simplifying the description, it is described by fixing the image horizontal to vertical ratio to "1".

Next, an operation of the stereoscopic image recording device 1 is described by using the drawings.
First, input image data I, the horizontal image size "h" and the vertical image size "v" of each viewpoint, horizontal viewpoint quantity information Nx and vertical viewpoint quantity information Ny, 3D image identification mark recording information M, and fixed aspect ratio recording information F are input to the stereoscopic image recording device 1.

Herein, the 3D image identification mark recording information M is the information indicating whether the mark for identifying that the image data to be recorded is the 3D image data is recorded in the image or not. Also, the fixed aspect ratio recording information F is the information indicating whether the image data is recorded such that the aspect ratio of the image data to be recorded is within a predetermined range or not.

Meanwhile, the input image data I is the data input from another device or the like, it is also possible that a device for directly outputting the image data is connected and the image data output from the device for outputting the image data is made the input image data. Of course, it is also possible to connect an image pickup device such as a CCD, an image signal input device for inputting a video signal or the like, an image display device for receiving a TV signal to display, an image reproducing device for reproducing a video and a DVD, an image reading device such as a scanner, and a device for outputting the image data such as an image data file reading device, for example.

In the stereoscopic image recording device 1, the horizontal image size "h" and the vertical image size "v" of each viewpoint, the horizontal viewpoint quantity information Nx and the vertical viewpoint quantity information Ny, and the 3D image identification mark recording information M and the fixed aspect ratio recording information F are input to the control means 2, and the input image data I is input to the image synthesis means 3.

Herein, the control means 2 is the means for controlling each of the image synthesis means 3, the padding means 4, the mark addition means 5 and the compression means 6 by using each input information, thereby allowing to create encoded 3D image data from the input image data I, and is realized by a CPU or the like, for example.

First, an operation when creating image encoding data at this time is described. The image synthesis means 3 is the means for arranging the input image data I, which is the image data of each viewpoint, from the horizontal viewpoint quantity information Nx and the vertical viewpoint quantity information Ny, as described in Figs. 4 and 5 to create the 3D image data.

As an example, hereinafter, it is described by setting the horizontal viewpoint quantity information Nx to "2" and the vertical viewpoint quantity information Ny to "1", and by setting the left-eye and right-eye two images as the input image data I . First, the input image data I is input to the image synthesis means 3. At the same time, the control means 2 transmits the horizontal viewpoint quantity information Nx and the vertical viewpoint quantity information Ny to the image synthesis means 3, and controls the image synthesis means 3 to synthesize the same with the input image data I. The image synthesis means 3 outputs the same to the padding means 4 as synthesized 3D synthesized image data. Also, this outputs horizontal image size H and vertical image size V of the 3D synthesized image data to the control means 2.

The padding means 4 is the means for performing padding or nothing to the 3D synthesized image data input from the image synthesis means 3 according to the control of the control means 2 to output the same.

Specifically, the 3D synthesized image data is input to the padding means 4. Herein, if the fixed aspect ratio recording information F indicated in the control means 2 is information for indicating to record the image with the predetermined aspect ratio, the aspect ratio of an entire 3D synthesized image data is obtained from the horizontal image size H and the vertical image size V of the 3D synthesized image data. In addition, when this is not the predetermined aspect ratio, padding is performed to the 3D synthesized image data, and output the same to the mark addition means 5 as the 3D padding image data adjusted to the predetermined aspect ratio.

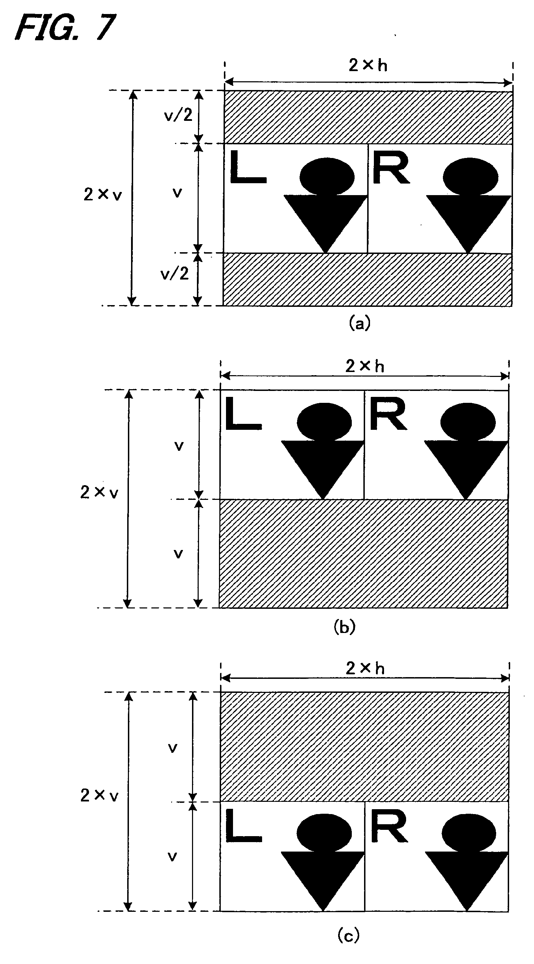

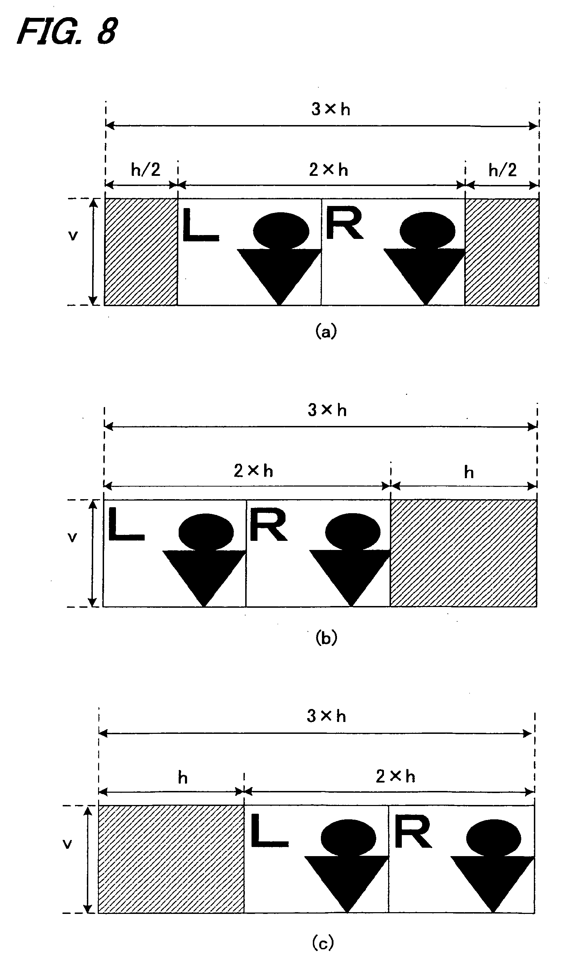

The padding method at that time is described by using Figs. 7 and 8. Figs. 7 and 8 are views showing the 3D padding image data, which is padded 3D image data.

Herein, for example, in the input image data I, if the image data of each viewpoint is the image data of which aspect ratio is "3/4" (=the quantity of pixels in the vertical direction/the quantity of pixels in the horizontal direction), the aspect ratio of the 3D synthesized image data input to the padding means is "3/8".

Herein, by setting the predetermined aspect ratio to "3/4", in order to set the aspect ratio of the input 3D synthesized image data to "3/4", it is required that the padding is performed to either or both of upper and lower direction of the image. Fig. 7 (a) shows the 3D padding image data obtained by padding in the upper and lower directions, Fig. 7 (b) shows the 3D padding image data obtained by padding in the lower direction, and Fig. 7 (c) shows the 3D padding image data obtained by padding in the upper direction, respectively. A shaded portion in the drawings is a padding area, and the horizontal image size H of the padded image data is "2xh" and the vertical image size V thereof is "2xv", and the aspect ratio thereof is "3/4".

Also, when the predetermined aspect ratio is set to "1/4", in order to set the aspect ratio of the input 3D synthesized image data to "1/4", it is required to perform padding to either or both of right and left direction of the image. Fig. 8(a) shows the 3D padding image data obtained by padding in the right and left directions, Fig. 8 (b) shows the 3D padding image data obtained by padding in the right direction, and Fig. 8 (c) shows the 3Dpadding image data obtained by padding in the left direction, respectively. The shaded portion in the drawings is the padding area, and the horizontal image size H of a padded image data is "3xh" and the vertical image size V thereof is "v", and the aspect ratio thereof is "1/4".

Also, the padding area is made a uniform image created with a predetermined color. The predetermined color may be any color, and for example, 18%-reflectance gray (achromatic) image is a preferable example. Meanwhile, of course it is possible that the image is drawn by minute dot pattern of which area percentage of white color and that of black color are 82% and 18%, respectively, by using an area modulation technique such as dithering.

In this manner, the padding means 4 outputs the padded 3D padding image data to the mark addition means 5, and the horizontal image size H and the vertical image size V of the output 3D padding image data to the control means 2, respectively.

On the contrary, if the fixed aspect ratio recording information F is not the information indicating to record the image synthesized with the predetermined aspect ratio, the input 3D synthesized image data is directly output to the mark addition means 5 as the 3D padding image data. Also, the predetermined aspect ratio may be any value.

Also, although it is set that the fixed aspect ratio recording information F is the information indicating whether to record the image data with a predetermined aspect ratio or not, this may be the information indicating whether to record the image data with the predetermined aspect ratio in a case not larger than the predetermined aspect ratio. For example, it may be set to perform padding, when the aspect ratio of the 3D synthesized image data, which is a padding object, is not larger than "2/3", so as to be the predetermined aspect ratio "2/3".

In this manner, by appropriately setting the minimum aspect ratio by using padding, when printing the image created with a printing device configured to be automatically trimed, for example, a case in which an automatically trimmed image is largely cut away in the horizontal direction and it becomes impossible to be viewed as the stereoscopic image, and a problem that it is not possible to determine how is the printed image depending on a trimming position, are prevented from occurring.

The mark addition means 5 is the means for adding the 3D identification mark of which object is allowing an observer to visually identify that the image is the 3D image according to the 3D image identification mark recording information M on the image data and output the same. The 3D padding image data is input from the padding means 4 to the mark addition means 5. At the same time, the 3D image identification mark recording information M is input from the control means 2. When the 3D image identification mark recording information M indicates that the 3D identification mark is contained within the image, the mark addition means 5 adds the 3D identification mark to the 3D padding image data and outputs the same to the compression means 6 as the 3D image data.

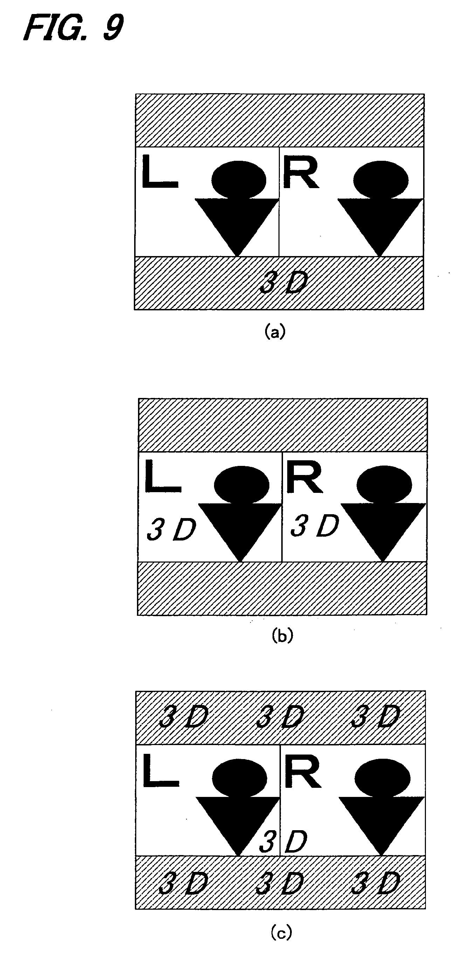

Fig. 9 shows an example of the 3D image data created by adding the 3D identification mark. For example, Fig. 9(a) is the image data in a case in which one 3D identification mark "3D" is added to the padding area of the 3D padding image data created in Fig. 7(a). Although herein the 3D identification mark is added on the padding area, this may be added to any position. Fig. 9(b) shows the 3D image data of a case in which two 3D identification marks are added on the image area of the 3D padding image data created in Fig. 7(a). In this case, the observer may observe the 3D mark itself as the stereoscopic image. Also, the quantity and position of the 3D identification mark is not limited, and Fig. 9(c) shows an example of the image data in which seven 3D identification marks are added.

Also, if the 3D image identification mark recording information M is the information indicating that the 3D identification mark is not contained in the image, the 3D padding image data is directly output to the compression means 6 as the 3D image data.

The compression means 6 is means for encoding the 3D image data according to the method such as JPEG and MPEG, and outputting the same as the encoded 3D image data. The compression means 6 is composed of a general-purpose compression means, and may be realized by any known technique such as JPEG, for example. Then, the encoded 3D image data is output to the multiplexing means 7. Meanwhile, although it has been described that the data is compressed by encoded by the compression means 6, the compression means 6 may be omitted and the uncompressed data may be output.

At the same time, the control means 2 transmits the information containing the horizontal image size H, the vertical image size V, the horizontal viewpoint quantity information Nx, the vertical viewpoint quantity information Ny, the 3D image identification mark recording information M, and the image horizontal to vertical ratio information, of an encoded entire image to the header information creation means 8, as the information necessary for creating the header 11, and transmits the information containing the horizontal image size H, the vertical image size V, the horizontal viewpoint quantity information Nx, the vertical viewpoint quantity information Ny, the 3D image identification mark recording information M to the extension decision means 10 as the information necessary for creating the extension information.

The header information creation means 8 is the means for creating the header 11 from the input information. At this time, the header information creation means 8 creates the header 11, which has been illustrated in Fig. 2, by using the information input from the control means 2, and transmits the same to the multiplexing means 7.

The multiplexing means 7 is the means for multiplexing the encoded 3D image data, which is input from the compression means 6, and the header 11. At this time, the multiplexing means 7 creates the multiplexed 3D image data by multiplexing the encoded 3D image data input from the compression means 6 and the header 11 input from the header information creation means 8 and outputs the same to the extension generation means 9.

The extension decision means 10 is the means for creating the extension information, which is the information of the extension of the image data to be finally output by the stereoscopic image recording device 1 from the input information, and outputting the same. The information containing the horizontal image size H, the vertical image size V, the horizontal viewpoint quantity information Nx, the vertical viewpoint quantity information Ny, and the 3D image identification mark recording information M from the control means 2 are input to the extension decision means 10.

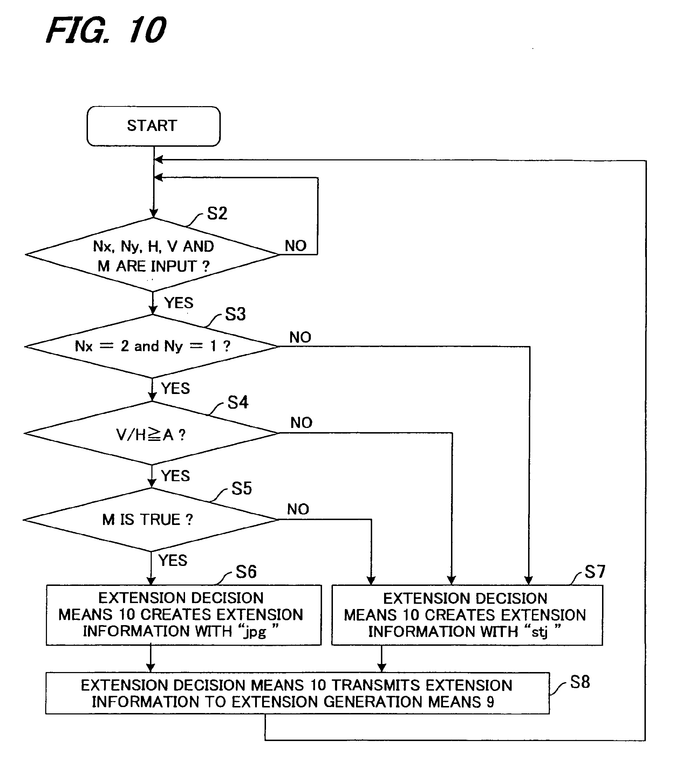

Hereinafter, an operation of the extension decision means 10 at this time is described by using a flow chart. Fig. 10 is the flow chart for illustrating the operation of the extension decision means 10.

In a judging step S2, the extension decision means 10 judges whether all of the horizontal image size H, the vertical image size V, the horizontal viewpoint quantity information Nx, the vertical viewpoint quantity information Ny, and the 3D image identification mark recording information M are input to the extension decision means 10 or not, and if all of them are input, shifts to a judging step S3, and if not, returns to the judging step S2.

In the judging step S3, the extension decision means 10 judges whether the horizontal viewpoint quantity information Nx is "2" and the vertical viewpoint quantity information Ny is "1", or not, and if so, shifts to a judging step S4, and if not, shifts to a step S7.

In the judging step S4, the extension decision means 10 judges whether a value obtained by dividing the vertical image size V by the horizontal image size H is equal to or larger than the predetermined aspect ratio value "A" or not, and if so, shifts to a judging step S5, and if not, shifts to the step S7. The predetermined aspect ratio value "A" can be any value, and herein, this is set to "2/3", for example.

In the judging step S5, the extension decision means 10 judges whether the 3D image identification mark recording information M is the information indicating to add the 3D identification mark (value is "TRUE") or not, and if so, shifts to a step S6, and if not, shifts to the step S7.

In the step S6, the extension decision means 10 transmits the extension information in which the extension is set to the predetermined extension, "jpg" for example, to the extension generation means 9, and shifts to a step S8. The extension information is the information indicating the extension of the file to be finally created by the recording device 1 of the present invention, and any extension may be selected. Also, the predetermined extension is set to that of the generally used file, for example, "jpg" and "jpeg" may be used for a still image, and "mpg", "avi", "asf", "wmv" and "mp4" may be used for a motion image.

In the step S7, the extension decision means 10 transmits the extension information in which the extension is set to the extension other than the predetermined extension, "stj" for example, to the extension generation means 9, and shifts to the step S8.

In the step S8, the extension decision means 10 transmits the extension information to the extension generation means 9, and returns to the step S2.

As described above, the extension decisionmeans 10 decides the extension of the output image data file created by the recording device 1 of the present invention, by using the input horizontal image size H, the vertical image size V, the horizontal viewpoint quantity information Nx, the vertical viewpoint quantity information Ny, and the 3D image identification mark recording information M, which are input.

The extension generation means 9 is the means for creating the output image data file by using the input extension information and the multiplexed 3D image data and outputting the same.

The extension information and the multiplexed 3D image data are input to the extension generationmeans 9. The extension generation means 9 creates the output image data file having the extension indicated by the extension information by using the multiplexing data. Specifically, the extension based on the extension information is added to the output image data file and output. In the extension generation means 9, data structure of the output image data file to be created is the same regardless of a content of the extension. That is to say, the content of the output image data file to be created in this description is the same JPEG image data file and only the extensions are different, regardless of the extension "jpg" and "stj".

In this manner, only when following three conditions are satisfied, the output image data file of the stereoscopic image recording device of the present invention is output as general-purpose 3D image data (general-purpose stereoscopic image data) of which extension is "jpg".

Condition 1) the horizontal viewpoint quantity information Nx is "2" and the vertical viewpoint quantity information Ny is "1",
Condition 2) the aspect ratio value (value obtained by dividing the vertical image size V by the horizontal image size H) of the 3D image data to be finally output is in the predetermined range (herein, not smaller than the predetermined value), and
Condition 3) the 3D image identification mark recording information M is the information indicating that the 3D identification mark is contained in the image, that is to say, the 3D identification mark is contained in the image to be finally output.

By doing so, in a case of displaying the general-purpose 3D image data on the conventional image display device, which does not support the 3D image data, and in a case of printing the same with the conventional image printing device, the 3D identification mark is displayed and printed in the image. Therefore, it is possible to prevent a confusion of general users, who do not grasp that this is the 3D image data.

Also, since the output image data of the stereoscopic image recording device of the present invention stores the information indicating that this image data is the 3D image data in the header thereof, it is possible to display and print that this is the 3D image data in a 3D image data-compliant device, provided with 3D control information analyzing means capable of interpreting the information. Therefore, it is possible to prevent the confusion of general users, who do not grasp that this is the 3D image data.

In addition, in a case in which the above-described three conditions are not satisfied, the 3D image data (stereoscopic image data) is judged to be not general-purpose and output with the extension other than "jpg", so that this is not recognized as the image data (JPEG image file) with the conventional device, which is not provided with the above-described 3D control information analyzing means, and this is not directly displayed and printed. Therefore, it is possible to prevent the confusion of the general users, who do not grasp that this is the 3D image data.

Further, in a case in which the output image data of which extension is "jpg", which is created by the stereoscopic image recording device of the present invention, is printed by a general automatic printing process with the conventional image printing device, there is a possibility that this is automatically trimmed to the predetermined aspect ratio conforming to a size of the printing paper. Herein, by making the aspect ratio of the output image data not smaller than the predetermined value, the problem that the 3D image data is largely cut away in the horizontal direction by trimming and the stereoscopic viewing becomes impossible and the problem that it is not possible to determine how the printed image is depending on the trimmed position, are prevented from occurring.

In addition, also in a case in which the output image data of the stereoscopic image recording device of the present invention is recorded with the extension other than "jpg", it is possible to reproduce the same also with the conventional device by reconverting the output image data to the general-purpose 3D image data of which extension is "jpg", which satisfies the above three conditions, in the 3D image data-compliant device provided with the 3D control information analyzing means.

Further, it is also possible to output as the general-purpose 3D image with the extension "jpg", only when the conditions 1 and 2 are satisfied, except the condition 3 out of the above-described three conditions. For example, in a case in which there is no area for padding the 3D image data to be created so that the 3D identification mark has to be added on the image to be stereoscopically displayed, there is a possibility that the 3D identification mark damages a stereoscopic effect of the 3D image and an atmosphere of the image. In such a case, even if the user inputs the 3D image identification mark recording information from outside so as not to add the 3D identification mark and does not add the mark, it is possible to output with the extension "jpg", so that it is possible to meet the created 3D image data even with the conventional device.

Further, although it has been described the extension generation means 9 and the extension determination 10 separated from each other in the above-description for clarity, it is also possible to configure such that the extension decision means 10 is contained in the extension generation means 9.

## Claims

1. A stereoscopic image recording device for creating stereoscopic image data from image data corresponding to two or more different viewpoints and recording the same, comprising:
general-purpose stereoscopic image data judging means for judging whether the image data contained in the stereoscopic image data, out of created stereoscopic image data, is general-purpose stereoscopic image data or not; and
extension decision recording means for adding a first predetermined extension as an extension of the stereoscopic image data and recording the same when the general-purpose stereoscopic image data judging means judges that the stereoscopic image data is the general-purpose stereoscopic image data, and adding a second predetermined extension as the extension of the stereoscopic image data and recording the same when judged not to be the general-purpose stereoscopic image data.

2. The stereoscopic image recording device according to Claim 1, wherein a condition of judging performed by the general-purpose stereoscopic image data judging means contains at least one of conditions: whether a viewpoint quantity is 2 or not, whether an aspect ratio satisfies a predetermined condition or not, whether a horizontal to vertical ratio of image scaling satisfies a predetermined condition or not, and whether arrangement of the image satisfies a predetermined condition or not.

3. The stereoscopic image recording device according to Claim 1 or 2, wherein the general-purpose stereoscopic image data judging means is further provided with mark judging means for judging to be the general-purpose stereoscopic image data, when the mark indicating the image for stereoscopic viewing is contained in the stereoscopic image data.

4. The stereoscopic image recording device according to any one of Claims 1 through 3, wherein the stereoscopic image data is recorded by setting the first predetermined extension as an extension of a JPEG image.

5. The stereoscopic image recording device according to any one of Claims 1 through 3, further comprising aspect ratio adjustingmeans for adjusting an aspect ratio of the stereoscopic image data to a predetermined aspect ratio, when the aspect ratio of the stereoscopic image data is other than the predetermined aspect ratio.

6. A program in a computer for creating stereoscopic image data from image data corresponding to two or more different viewpoints and recording the same, for realizing:
a general-purpose stereoscopic image data judging function for judging whether the stereoscopic image data is general-purpose stereoscopic image data in which a viewpoint quantity of the image data contained in the stereoscopic image data is two and an aspect ratio of the stereoscopic image data satisfies a predetermined condition or not, out of created stereoscopic image data; and
an extension decision recording function for adding a first predetermined extension as an extension of the stereoscopic image data and recording the same when the general-purpose stereoscopic image data judging function judges that the stereoscopic image data is the general-purpose stereoscopic image data, and adding a second predetermined extension as an extension of the stereoscopic image data and recording the same when judged not to be the general-purpose stereoscopic image data.
